# EUROPÄISCHE PATENTANMELDUNG

(11) **EP 1 189 076 A2**
(43) Veröffentlichungstag der Anmeldung: **20.03.2002**
(21) Anmeldenummer: 01116125.4
(22) Anmeldetag: 03.07.2001
(51) Int. Cl.: G01V 3/10

(54) **Verfahren zum Orten von Objekten und Detektorvorrichtung**

(30) Priorität: 15.09.2000 DE 10045697
(71) Anmelder: FIRMA ING. KLAUS EBINGER, D-51149 Köln (DE)
(72) Erfinder: Münscher, Dieter, 51143 Köln (DE); Ebinger, Klaus Joachim, 51143 Köln (DE)
(74) Vertreter: Heim, Hans-Karl, Dipl.-Ing.

(57) **Zusammenfassung**

Die Erfindung betrifft ein Verfahren zum Orten von Objekten mit einer Detektorvorrichtung, bei dem auf einer Primärseite der Detektorvorrichtung ein Oszillator einen Schwingkreis mit einer Sendespule anregt und die Sendespule ein elektromagnetisches Wechselfeld aussendet und auf einer Sekundärseite der Detektorvorrichtung in einer Empfangsspule ein elektromagnetisches Wechselfeld induziert wird, wobei die Sendespule und die Empfangsspule räumlich auseinanderliegend so angeordnet sind, dass eine kontinuierliche Spannungstransformation auf die Empfangsspule erfolgt, aus der Primärseite und der Sekundärseite zwei Vergleichsspannungen gewonnen werden, aus den Vergleichsspannungen eine Differenzspannung gewonnen wird und die Vergleichsspannung zur Objektanzeige und/oder Objektauswertung benutzt wird. Die Erfindung betrifft ferner eine Detektorvorrichtung, mit welcher das erfindungsgemäße Verfahren vorteilhaft durchführbar ist.

## Beschreibung

Die Erfindung betrifft ein Verfahren zum Orten von Objekten mit einer Detektorvorrichtung, bei dem auf einer Primärseite der Detektorvorrichtung ein Oszillator einen Schwingkreis mit einer Sendespule anregt und die Sendespule ein elektromagnetisches Wechselfeld aussendet und bei dem auf einer Sekundärseite der Detektorvorrichtung in einer Empfangsspule ein elektromagnetisches Wechselfeld induziert wird. Die Erfindung betrifft ferner eine Detektorvorrichtung mit einer Primärseite, welche einen Oszillator und eine Sendespule aufweist, und einer Sekundärseite, welche eine Empfangsspule aufweist.

Das gattungsgemäße Verfahren und die gattungsgemäße Vorrichtung sind Bestandteile von Sender-Empfänger-Systemen, welche auch als TR-Systemen (Transmitter/Receiver) bezeichnet werden. Bei derartigen Systemen, die beispielsweise auch zur Ortung von Metallobjekten verwendet werden, wird von einer Sendespule ein elektromagnetisches Wechselfeld ausgesendet, welches von einer Empfangsspule erfasst wird. Befindet sich in der Nähe der Vorrichtung ein Objekt, welches die Ausbildung des elektromagnetischen Wechselfeldes beispielsweise durch das Entstehen von Wirbelströmen in dem Objekt beeinflusst, wird ebenfalls das von der Empfangsspule empfangene elektromagnetische Wechselfeld beeinflusst. Aus der veränderten in der Empfangsspule induzierten Spannung lässt sich somit auf die Anwesenheit eines Objektes schließen. Grundsätzlich ist es dabei erwünscht, den direkten Einfluss der Sendespule auf das in der Empfangsspule nachgewiesene Signal zu minimieren, um so die Nachweisempfindlichkeit des Systems zu erhöhen.

In der EP 0 957 377 A2 sind eine Vorrichtung und ein Verfahren zum Orten von Metallteilen offenbart. Hier erfolgt die Minimierung des direkten Einflusses der Sendespule auf die Empfangsspule durch die relative räumliche Stellung der Spulenachsen. Wenn die Ebenen der Sendespule und der Empfangsspule einen Winkel von 90° zueinander aufweisen, findet eine weitgehende Entkopplung der Spulen statt.

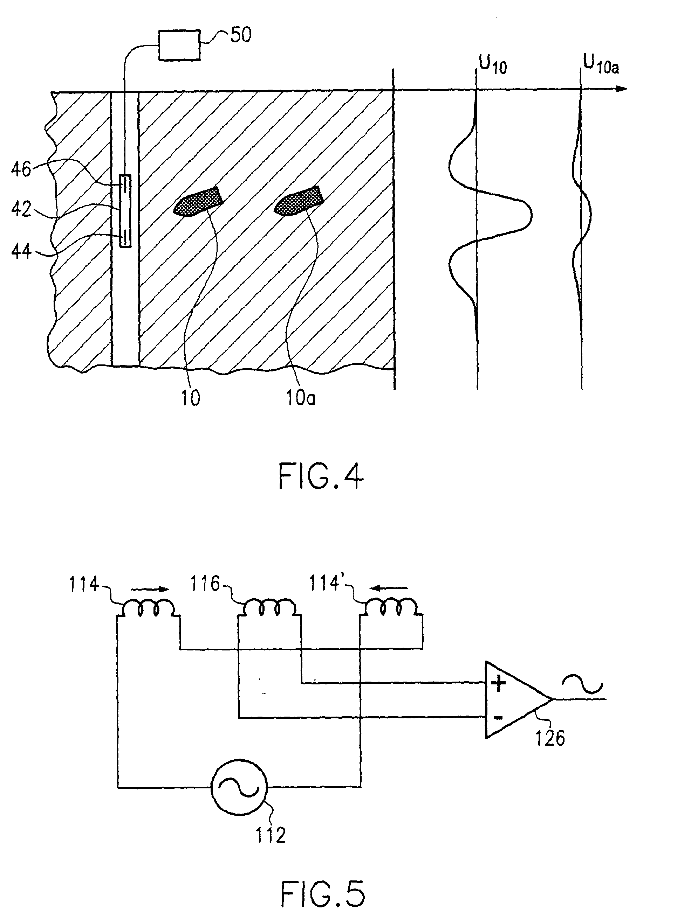

Ein weiteres Beispiel für ein bekanntes TR-System ist in Fig. 5 schematisch dargestellt. Die Anordnung umfasst einen Oszillator 112, welcher zwei Sendespulen 114, 114' zum Aussenden elektromagnetischer Felder anregt. Die beiden Sendespulen 114, 114' sind gegeneinander geschaltet. Weiterhin ist eine Empfängerspule 116 vorgesehen. Die Ausgangsspannung der Empfängerspule wird von einem Verstärker 126 verstärkt. Durch die Gegeneinanderschaltung der Sendespulen 114, 114' wird die Empfängerspule 116 mit gegenphasigen Spannungen von den Sendespulen beaufschlagt. Auf diese Weise erfolgt eine Kompensation des direkten Einflusses der Sendespulen 114, 114' auf die Empfängerspule. Allerdings hat diese Anordnung den Nachteil, dass die gegenphasigen von den Sendespulen 114, 114' ausgesendeten elektromagnetischen Felder "gegeneinander" arbeiten und sich dadurch in ihrer Ausbildung behindern. Auf diese Weise wird beispielsweise die Reichweite eines derartigen Systems herabgesetzt.

Grundsätzlich besteht bei Systemen, welche eine geometrische und/oder räumliche Entkopplung der Sendespulen und der Empfangsspulen verwenden weiterhin das Problem, dass der Sondenaufbau eine hohe mechanische Präzision aufweisen muss. Ferner haben die Systeme eine starke Richtungsabhängigkeit, so dass sie beispielsweise als Bohrlochsonde, bei welcher man auf eine gute Nachweisempfindlichkeit in allen Richtungen angewiesen ist, nur bedingt einsetzbar sind.

Der Erfindung liegt die **Aufgabe** zugrunde, das gattungsgemäße Verfahren und die gattungsgemäße Detektorvorrichtung dahingehend weiterzubilden, dass bei einfachem mechanischem und elektrischem Aufbau und guter elektrischer Stabilität mit hoher Nachweisempfindlichkeit gearbeitet werden kann.

Diese Aufgabe wird mit den Merkmalen der unabhängigen Ansprüche gelöst. Vorteilhafte Ausführungsformen sind in den abhängigen Ansprüchen angegeben.

Die Erfindung baut auf dem gattungsgemäßen Verfahren dadurch auf, dass die Sendespule und die Empfangsspule räumlich auseinanderliegend so angeordnet sind, dass eine kontinuierliche Spannungstransformation auf die Empfangsspule erfolgt, dass aus der Primärseite und der Sekundärseite zwei Vergleichsspannungen gewonnen werden, dass aus den Vergleichsspannungen eine Differenzspannung gewonnen wird und dass die Differenzspannung zur Objektanzeige und/oder Objektauswertung benutzt wird. Auf diese Weise wird der Einfluss der Primärseite auf die Sekundärseite berücksichtigt, ohne dass eine geometrische oder eine räumliche Entkopplung der Sendespule von der Empfängerspule erforderlich wäre. Vielmehr ist eine stärkere Kopplung zwischen den Detektorspulen zur Amplitudenanpassung geradezu erwünscht. Hieraus ergibt sich, dass für den mechanischen Sondenaufbau eine geringere Präzision erforderlich ist als bei den geometrisch beziehungsweise räumlich entkoppelten Spulen des Standes der Technik, wobei die gleiche beziehungsweise eine noch verbesserte Wirkung zur Verfügung gestellt wird. Durch die Tatsache, dass sich das Senderfeld ohne gegenphasige Effekte ungehindert ausbilden kann und dadurch, dass man durch einen relativ groß wählbaren Basisabstand der Detektorspulen auch die Wirkung der äußeren, weitreichenden Feldkomponenten des Senders detektieren und zur Anzeige bringen kann, erhält man eine im Vergleich zum Stand der Technik erhöhte Ortungsreichweite. Ferner kommt es zu einer Objektselektion, da bei großem Abstand der Spulen Kleinteile kaum noch detektiert werden, jedoch große Teile in großer Tiefe im Boden nachgewiesen werden können.

Es ist bevorzugt, wenn der Kopplungsfaktor zwischen Primärseite und Sekundärseite räumlich und/oder geometrisch bestimmt und/oder verändert werden kann. Damit lässt sich ohne Entkopplung mit hohen Vergleichspegeln arbeiten, wobei eine Anpassung gerade auf der Grundlage einer bestehenden Kopplung durch räumliche und/oder geometrische Variation erfolgen kann.

Vorzugsweise werden eine primäre Signalspannung und eine sekundäre Signalspannung nach Betrag und/oder Phase kompensiert. Durch Kompensation des Betrages der Spannung erreicht man zumindest teilweise, dass sich die Spannung der Primärseite und die Spannung der Sekundärseite gegeneinander aufheben. Wenn eine Phasenkompensation zusätzlich zu einer Spannungskompensation ausgeführt wird, gelingt eine fast vollständige Entkopplung der sender- und empfängerseitigen Vorgänge. Allerdings ist auch denkbar, ausschließlich mit einer Phasenkompensation zu arbeiten.

Vorzugsweise wird der Betrag der Signalspannungen über ein einstellbares Summierglied kompensiert. Unabhängig von einer Phasenkompensation wird durch dieses gegenphasige Summieren eine Symmetrisierung der primärseitigen Spannung und der sekundärseitigen Spannung in Bezug auf den Betrag der Spannungen erreicht.

Besonders vorteilhaft ist es, wenn der Phasenabgleich zur Kompensation der Restspannung durch Verändern der Sendefrequenz erfolgt. Durch dieses Verschieben der Frequenz um einen geeigneten Betrag erhält man in einfacher Weise die Möglichkeit, die Spannungen im Hinblick auf die Phase so zu verändern, dass die Phasenkompensation möglich ist.

Ebenfalls kann vorteilhaft sein, dass der Phasenabgleich bei fester Sendefrequenz durch Verändern der Resonanzfrequenz eines Empfangsschwingkreises erfolgt.

Von besonderem Vorteil ist es, wenn mittels der Spannungskompensation ein Messspannungsminimum erzeugt wird. Durch die Einstellung dieses Messspannungsminimum durch eine Amplitudenkompensation und/oder eine Phasenkompensation erhält man ein Messsignal, welches vom direkten Einfluss der Sendespule auf die Empfängerspule praktisch unbeeinflusst ist. Folglich steht ein hochempfindliches System zur Verfügung, welches zudem aufgrund der nicht erforderlichen geometrischen beziehungsweise räumlichen Entkopplung eine große Reichweite hat.

Das Verfahren ist besonders dadurch vorteilhaft, dass die kompensierte Spannung verstärkt wird und dass die verstärkte Spannung synchronisiert mit der Spannung der Primärseite gleichgerichtet wird. Man erhält auf diese Weise ein gleichgerichtetes Messsignal, welches aufgrund der Synchronisation weitgehend von Störeffekten befreit ist.

Vorzugsweise werden zur Optimierung des Signal-Rausch-Verhältnisses hohe Vergleichsspannungspegel verwendet. Diese können beispielsweise im Bereich von ca. 2 V bis ca. 6 V liegen. Im Gegensatz zum Stand der Technik ist man also nicht darauf angewiesen, mit Spannungen im Mikrovoltbereich zu arbeiten. Entsprechend wird ein elektrisches Driften der Anordnung, beispielsweise aufgrund der Temperatur und einer mechanischen Dejustierung der Sondenanordnung, vermieden. Allerdings kann je nach Bedarf auch mit wesentlich kleineren Spannungen gearbeitet werden.

Bevorzugt werden durch hohe Vergleichsspannungspegel hohe Differenzspannungen erzeugt, die nur eine geringe Gesamtverstärkung erfordern. Beispielsweise kann mit einem Gesamtverstärkungsfaktor von bis zu etwa 300 gearbeitet werden. Dieser niedrige Gesamtverstärkungsfaktor, welcher aus den niedrigen Stufenverstärkungen der Schaltung resultiert, liegt weit unter dem Faktor herkömmlicher aktiver Systeme. Hierdurch werden Fremdstörungen nur in sehr geringem Maße aufgenommen, was wiederum die Qualität und die Empfindlichkeit der Messung verbessert.

Das System ist in vorteilhafter Weise in der Lage, mit einer Sendefrequenz im Bereich von ca. 500 Hz bis ca. 50 kHz zu arbeiten. Es steht somit ein großer Frequenzbereich zur Verfügung, so dass das erfindungsgemäße Verfahren den jeweiligen unterschiedlichen Anforderungen angepasst werden kann.

Vorzugsweise wird eine Ausgangsspannung einem Analog-Digital-Wandler (ADC) und/oder einem Datenlogger und/oder einem Anzeigeinstrument zugeführt. Man erhält somit zahlreiche Möglichkeiten zur Verarbeitung der Ausgangsinformation, etwa durch Weiterverarbeitung in einem Computer, durch Aufzeichnung der erfassten Werte oder durch sofortiges Erfassen der Werte auf der Grundlage eines Anzeigeinstrumentes. Letzteres kann sowohl optisch als auch akustisch arbeiten.

Es ist von Vorteil, wenn die Spannung der Primärseite an einem Punkt abgegriffen wird, welcher zwischen dem Oszillator und einer induktiven Drossel liegt, welche den Oszillator von der Sendespule trennt. Eine solche Drossel entkoppelt in vorteilhafter Weise den Oszillator von dem Schwingkreis der Primärseite, wodurch besonders hohe Sendeamplituden entstehen können. Diese führen zu einem kräftigen Wechselfeld und damit zu einer wirkungsvollen Besendung der Suchobjekte.

Die Erfindung baut auf der gattungsgemäßen Detektorvorrichtung dadurch auf, dass die Kopplung von Sendespule und Empfangsspule vorgegeben und/oder veränderbar ist und dass Mittel zum Erzeugen einer Differenzspannung aus einer Spannung der Primärseite und einer Spannung der Sekundärseite vorgesehen sind. Auf diese Weise wird der Einfluss der Primärseite auf die Sekundärseite berücksichtigt, ohne dass eine geometrische oder eine räumliche Entkopplung der Sendespule von der Empfängerspule erforderlich wäre. Vielmehr ist eine stärkere Kopplung zwischen den Detektorspulen zur Amplitudenanpassung geradezu erwünscht. Hieraus ergibt sich, dass für den mechanischen Sondenaufbau eine geringere Präzision erforderlich ist als bei den geometrisch beziehungsweise räumlich entkoppelten Spulen des Standes der Technik, wobei die gleiche beziehungsweise eine noch verbesserte Wirkung zur Verfügung gestellt wird. Durch die Tatsache, dass sich das Senderfeld ohne gegenphasige Effekte ungehindert ausbilden kann und dadurch, dass man durch einen groß wählbaren Basisabstand der Detektorspulen auch die Wirkung der äußeren, weitreichenden Feldkomponenten des Senders detektieren und zur Anzeige bringen kann, erhält man eine im Vergleich zum Stand der Technik erhöhte Ortungsreichweite.

Vorzugsweise umfassen die Mittel zum Erzeugen einer Differenzspannung Mittel zum Kompensieren einer Spannung bezüglich des Betrages. Hierdurch erreicht man zumindest teilweise, dass sich die Spannung der Primärseite und die Spannung der Sekundärseite gegeneinander aufheben.

Ebenfalls kann vorteilhaft sein, wenn die Mittel zum Erzeugen einer Differenzspannung Mittel zum Kompensieren einer Spannung bezüglich der Phase umfassen. Wenn eine Phasenkompensation zusätzlich zu einer Spannungskompensation ausgeführt wird, gelingt eine fast vollständige Entkopplung der sender- und empfängerseitigen Vorgänge. Allerdings ist auch denkbar, ausschließlich mit einer Phasenkompensation zu arbeiten.

Bevorzugt umfassen die Mittel zum Erzeugen einer Differenzspannung Mittel zum gegenphasigen Summieren der Spannung der Primärseite und der Spannung der Sekundärseite. Unabhängig von einer Phasenkompensation wird durch dieses gegenphasige Summieren eine Symmetrisierung der primärseitigen Spannung und der sekundärseitigen Spannung in Bezug auf den Betrag der Spannungen erreicht.

Vorzugsweise sind Mittel zum Verändern der Frequenz auf der Primärseite vorgesehen. Durch ein Verschieben der Frequenz um einen geeigneten Betrag erhält man in einfacher Weise die Möglichkeit, die Spannungen im Hinblick auf die Phase so zu verändern, dass die Phasenkompensation gelingen kann.

Ebenfalls kann vorteilhaft sein, dass Mittel zum Verändern der Resonanzfrequenz eines Resonanzschwingkreises vorgesehen sind. Auch hierdurch ist ein Phasenabgleich möglich.

Es ist vorteilhaft, wenn ein erster Verstärker zum Erzeugen der Spannung der Sekundärseite aus der auf der Sekundärseite induzierten Spannung vorgesehen ist. Durch eine geeignete Einstellung dieses Verstärkers ist es möglich, die Spannung der Sekundärseite auf einen Betrag zu bringen, so dass sie sich in geeigneter Weise mit der Spannung der Primärseite, etwa in einem Differenzverstärker weiterverarbeiten lässt.

Geeigneterweise wird zwischen dem Oszillator und der Sendespule eine induktive Drossel angeordnet und die Spannung der Primärseite zwischen dem Oszillator und der induktiven Drossel abgegriffen. Eine solche Drossel entkoppelt in vorteilhafter Weise den Oszillator von dem Schwingkreis der Primärseite, wodurch besonders hohe Sendeamplituden entstehen können. Diese führen zu einem kräftigen Wechselfeld und damit zu einer wirkungsvollen Besendung der Suchobjekte.

In einer bevorzugten Ausführungsform ist ein Ausgang der Mittel zum gegenphasigen Summieren mit einem Eingang eines zweiten Verstärkers verbunden, ein Ausgang des zweiten Verstärkers ist mit einem Eingang eines Synchrongleichrichters verbunden, und die Spannung der Primärseite wird dem Synchrongleichrichter über ein Verzögerungsglied zugeführt, wobei die verstärkte Spannung synchronisiert und mit der Spannung der Primärseite gleichgerichtet wird. Man erhält auf diese Weise ein gleichgerichtetes Messsignal, welches aufgrund der Synchronisation weitgehend von Störeffekten befreit ist.

Die erfindungsgemäße Detektorvorrichtung ist besonders dann vorteilhaft, wenn an ihrem Ausgang ein Analog-Digital-Wandler (ADC) und/oder ein Datenlogger und/oder eine Anzeigevorrichtung vorgesehen sind. Man erhält somit zahlreiche Möglichkeiten zur Verarbeitung der Ausgangsinformation, etwa durch Weiterverarbeitung in einem Computer, durch Aufzeichnung der erfassten Werte oder durch sofortiges Erfassen der Werte auf der Grundlage eines Anzeigeinstrumentes. Letzteres kann sowohl optisch als auch akustisch arbeiten.

Besonders vorteilhaft ist es, wenn zumindest ein Teil der Primärseite und zumindest ein Teil der Sekundärseite in einem Rohr angeordnet sind. Bei einer solchen Anordnung in einem Rohr ist die erfindungsgemäße Detektorvorrichtung besonders vorteilhaft als Bohrlochsonde verwendbar. Aufgrund der nicht erforderlichen geometrischen beziehungsweise räumlichen Entkopplung der Sendespule und der Empfangsspule weisen die von der erfindungsgemäßen Detektoreinrichtung ausgesendeten elektromagnetischen Wechselfelder praktisch keine Richtungsabhängigkeit auf, im Gegensatz zu den Systemen des Standes der Technik. Im Zusammenhang mit einer Bohrlochsonde bedeutet dies, dass diese umlaufend, das heißt in radialer Richtung, eine absolut gleichmäßige Empfindlichkeit aufweist. Dies ist für eine datengestützte Messung von besonderem Vorteil.

Im Zusammenhang mit einer Bohrlochsonde ist es ferner von besonderem Vorteil, dass zumindest ein Teil der Auswerteelektronik in dem Rohr angeordnet ist. Für die Stromversorgung und den Analogausgang ist dann lediglich ein dreiadriges Kabel erforderlich, dessen Länge aufgrund der elektrischen Stabilität des Systems unkritisch ist.

Eine als Bohrlochsonde eingesetzte Zylindersonde ist zweckmäßigerweise spulenmäßig mittels zweier Ferritkerne in verkleinerter Form ausgebildet, womit man wesentlich größere Detektionsreichweiten, auch in radialer Richtung erreicht. Allerdings kann insbesondere bei anderen Anwendungen auch eine Anordnung mit Luftspulen vorgesehen sein.

Der Erfindung liegt die überraschende Erkenntnis zugrunde, dass ein Verfahren und eine Detektorvorrichtung auf der Grundlage eines einfachen mechanischen und elektrischen Aufbaus mit hoher elektrischer Stabilität zur Verfügung gestellt werden kann, indem eine Kompensation des Einflusses des Primärfeldes auf die Empfängerspule durch schaltungstechnische Mittel, das heißt nicht notwendig durch eine geometrische und/oder räumliche Trennung der Sende- und der Empfangsspule erreicht wird. Das System hat eine hohe Ortungsreichweite, die sich insbesondere dadurch begründet, dass sich das Senderfeld ohne gegenphasige Effekte ungehindert ausbilden kann. Ferner kann man durch einen optionalen großen Abstand zwischen den Detektorspulen auch die Wirkung der äußeren, weitreichenden Feldkomponenten des Senders detektieren und zur Anzeige bringen. Das System kann mit hohen Spannungspegeln arbeiten, so dass ein elektrisches Driften aufgrund äußerer Einflüsse nicht zum Tragen kommt, wobei allerdings je nach Detektorbauart auch niedrige Spannungswerte verwendet werden können, ohne die Funktion nachteilig zu beeinflussen. Aufgrund des möglichen großen Basisabstandes entsteht eine lose induktive Kopplung in der Art eines Transformators, welche im Hinblick auf eine Amplitudenanpassung vorteilhaft ausgenutzt werden kann. Verfahren und Vorrichtung gemäß der Erfindung sind in vorteilhafter Weise in vielfältigen TR-Spulenkonfigurationen, z.B. Suchteller- oder Ringkonfigurationen, einsetzbar.

Die Erfindung wird nun mit Bezug auf die begleitenden Zeichnungen anhand bevorzugter Ausführungsformen beispielhaft erläutert.
- Fig. 1: zeigt ein Blockschaltbild einer ersten Ausführungsform einer erfindungsgemäßen Detektorvorrichtung;
- Fig. 2: zeigt ein Blockschaltbild einer zweiten Ausführungsform einer erfindungsgemäßen Detektorvorrichtung;
- Fig. 3: zeigt ein Blockschaltbild einer dritten Ausführungsform einer erfindungsgemäßen Detektorvorrichtung;
- Fig. 4: zeigt ein Ausführungsbeispiel einer speziellen Ausführungsform einer erfindungsgemäßen Detektorvorrichtung; und
- Fig. 5: zeigt eine Spulenanordnung des Standes der Technik.

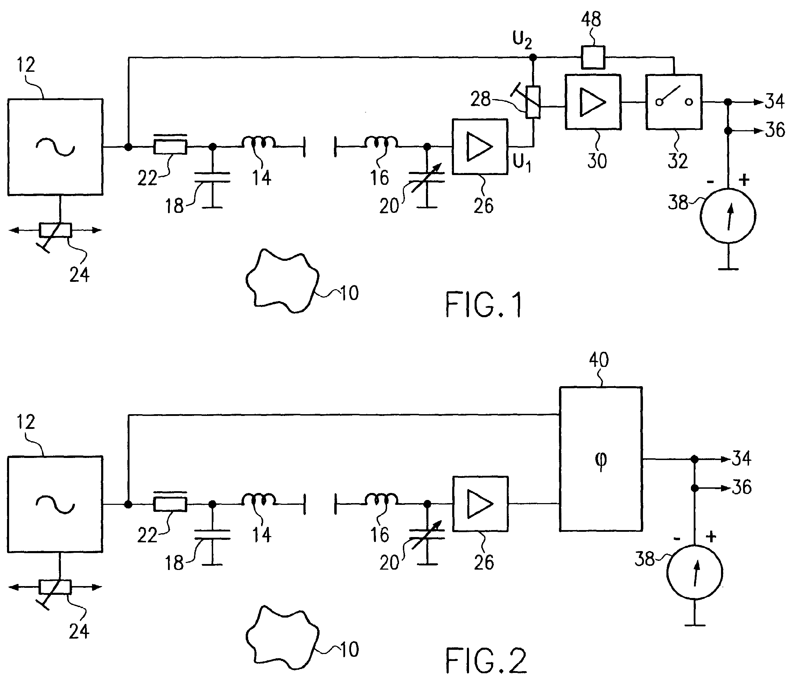

In Fig. 1 ist ein Blockschaltbild einer erfindungsgemäßen Detektorvorrichtung dargestellt. Die Detektorvorrichtung dient der Ortung eines Objektes 10. Die Detektorvorrichtung enthält einen Oszillator 12, welcher mit einer Sendespule 14 verbunden ist. Ferner ist eine Empfangsspule 16 vorgesehen. Die Sendespule 14 bildet zusammen mit einem Kondensator 18 einen primärseitigen Schwingkreis. Die Empfangsspule 16 bildet zusammen mit einem weiteren verstellbaren Kondensator 20 einen sekundärseitigen Schwingkreis. Der primäre Schwingkreis ist über eine induktive Drossel 22 mit dem Oszillator 12 verbunden. Zum Erzeugen einer Phasenverschiebung ist der Oszillator 12 mit einem Frequenzschieber 24 versehen. Das Ausgangssignal des sekundärseitigen Schwingkreises 16, 20 ist mit dem Eingang eines Verstärkers 26 verbunden. Das Ausgangssignal des Verstärkers 26 wird als Spannung U1 der Sekundärseite auf einen Eingang eines Summierers 28 gegeben. Auf einen anderen Eingang des Summierers 28 wird als Spannung U2 der Primärseite eine Spannung gegeben, welche an einem Punkt zwischen dem Oszillator 12 und der induktiven Drossel 22 abgegriffen wird. Die Ausgangsspannung des Summierers 28 wird in einem weiteren Verstärker 30 verstärkt und einem Synchrongleichrichter 32 zugeführt. Dieser Synchrongleichrichter 32 wird von der Spannung der Primärseite U2 geschaltet. Die Spannung der Primärseite U2 wird dem Synchrongleichrichter 32 über ein Verzögerungsglied 48 zugeführt. Das Ausgangssignal des Synchrongleichrichters 32 wird einem Analog-Digital-Wandler (ADC) 34, einem Datenlogger 36 und einer Anzeigevorrichtung 38 zugeführt.

Prinzipiell arbeitet die Vorrichtung gemäß Fig. 1 in der Weise, dass der Schwingkreis der Primärseite 14, 18 durch den Oszillator 12 angeregt wird. Diese Anregung erfolgt über die induktive Drossel 22 welche in vorteilhafter Weise den Oszillator 12 von dem Schwingkreis entkoppelt. Hierdurch entstehen besonders hohe Sendeamplituden, welche zu einem kräftigen Wechselfeld und damit zu einer wirkungsvollen Besendung des Suchobjektes 10 führen. Die Sendefrequenzen können je nach Anwendung in einem Bereich zwischen etwa 500 Hz und 50 kHz gewählt werden. Das von der Sendespule 14 ausgesendete Wechselfeld erzeugt in dem Objekt 10 Wirbelströme, welche ein von dem Objekt 10 beeinflusstes elektromagnetisches Feld zur Folge haben. Dieses wird von der Empfangsspule 16 empfangen, wodurch eine Schwingung in dem sekundärseitigen Schwingkreis 16, 20 erzeugt wird. Diese Spannung wird von dem Verstärker 26 auf einen geeigneten Wert verstärkt. Die Ausgangsspannung U1 des Verstärkers 26 und eine Spannung U2, welche zwischen dem Oszillator 12 und der induktiven Drossel 22 abgegriffen wird, werden dem Summierer 28 zugeführt. Die beiden Spannungen U1 und U2 werden dem Summierer 28 gegenphasig zugeführt, so dass hier eine Symmetrisierung beider Spannungen in Bezug auf den Betrag erfolgt. Im allgemeinen Fall wird hierdurch jedoch keine vollständige Spannungskompensation erreicht. Um diese zu erreichen wird zusätzlich durch den Frequenzschieber 24 eine Phasenverschiebung durchgeführt, so dass ein Abgleich nach Betrag und Phase erfolgt, was zu einer nahezu vollständigen Spannungskompensation führt. Die Ausgangsspannung des Summierers 28, welche das Messsignal bildet, wird einem Verstärker 30 zugeführt und dort verstärkt. Die verstärkte Ausgangsspannung des Verstärkers 30 wird in einem Synchrongleichrichter 32 gleichgerichtet. Dieser Synchrongleichrichter 32 wird durch die Spannung U2 der Primärseite geschaltet, so dass hierdurch ein weiterer Abgleich der Messspannung erfolgt. Die Spannung der Primärseite U2 wird dem Synchrongleichrichter 32 über ein Verzögerungsglied 48 zugeführt. Die Ausgangsspannung des Synchrongleichrichters 32 kann dann in einer analogen Anzeigevorrichtung 38 zur Anzeige gebracht werden. Ferner kann sie über einen ADC 34 beispielsweise einem Computer zur digitalen Datenverarbeitung zugeführt werden. Weiterhin kann sie zur Registrierung einem Datenlogger eingegeben werden.

In Fig. 2 ist eine weitere Ausführungsform einer erfindungsgemäßen Detektorvorrichtung dargestellt. Komponenten, welche denjenigen aus Fig. 1 entsprechen, sind mit denselben Bezugszeichen gekennzeichnet. Im Unterschied zu der Vorrichtung gemäß Fig. 1 findet in Fig. 2 eine reine Phasenauswertung durch eine Phasenausgleichseinrichtung 40 statt. Auch hierdurch kann eine Kompensation auf elektronischem Wege erfolgen, ohne dass eine geometrische oder eine räumliche Entkopplung der Sendespule und der Empfangsspule erforderlich wäre.

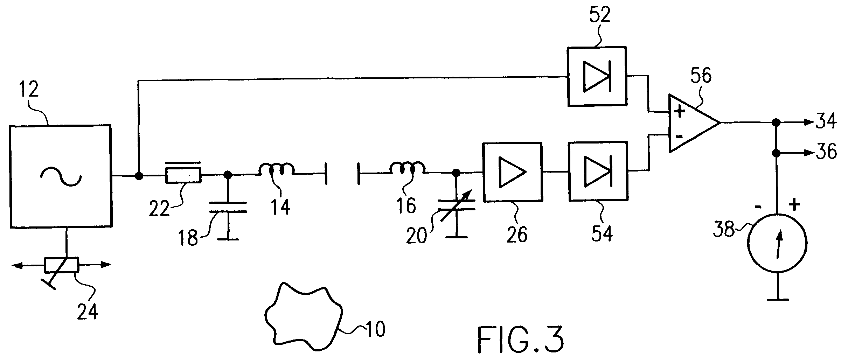

In Fig. 3 ist eine weitere Ausführungsform einer erfindungsgemäßen Detektorvorrichtung dargestellt. Komponenten, welche denjenigen aus Fig. 1 oder Fig. 2 entsprechen, sind mit denselben Bezugszeichen gekennzeichnet. Im Unterschied zu der Vorrichtung gemäß Fig. 2 findet in Fig. 3 eine reine Gleichspannungsauswertung statt. Zu diesem Zweck werden die Signalspannungen des Senders und des Empfängers mittels der Gleichrichter 52 und 54 gleichgerichtet. Die Ausgangsspannungen der Gleichrichter 52 und 54 werden einem Differenzverstärker 56 zugeführt. Auf diese Wiese kann eine Wechselspannungskompensation entfallen.

Fig. 4 zeigt eine mögliche Anwendung einer erfindungsgemäßen Detektorvorrichtung als Bohrlochsonde. Die Bohrlochsonde ist als Rohr 42 ausgebildet, in welchem sich die Primärseite 44 und die Sekundärseite 46 der Detektorvorrichtung befinden. Zusätzlich kann sich in dem Rohr 42 in vorteilhafter Weise der sensierende Teil der Elektronik befinden. Dies hat Vorteile gegenüber Bohrlochsonden des Standes der Technik. Bei diesen wurden bislang schlanke Zylindersonden mit geringem Durchmesser verwendet, welche eine Spulenanordnung gemäß der in Fig. 5 dargestellten Spulenanordnung des Standes der Technik enthalten. Die drei Spulen wurden gemäß dem Stand der Technik auf einen langen Eisenkern gewickelt. Als nachteilig erwies sich dabei, dass die Anordnung im Hinblick auf eine herkömmliche Bombe nicht einmal eine Ortungsreichweite von 1 m erreicht. Ferner entstanden bei einer solchen Anordnung aufgrund der langen Verbindungskabel dämpfende Effekte, die zu Abgleichstörungen führten. Diese Nachteile sind durch die Verwendung einer erfindungsgemäßen Detektorvorrichtung als Bohrlochsonde ausgeräumt, da für die externen Komponenten 50 (z. B. Stromversorgung/Analogausgang) lediglich ein dreiadriges Kabel erforderlich ist, dessen Länge nahezu unkritisch ist. Ferner wird die Ortungsreichweite beträchtlich erhöht, da sich das Senderfeld ohne gegenphasige Effekte ungehindert ausbilden kann und da man ferner durch einen großen Basisabstand der Detektorspulen auch die Wirkung der äußeren weitreichenden Feldkomponenten des Senders detektieren und zur Anzeige bringen kann.

In Fig. 4 ist ferner anhand zweier Spannungsprofile dargestellt, dass das Messsignal genau dann einen Maximalwert erreicht, wenn sich die Suchobjekte 10, 10a in der Mitte der Sonde befinden. Hierdurch gelingt eine genaue Tiefenangabe und Lokalisation des Objektes. Die mit U₁₀ gekennzeichnete Spannung beschreibt ein Spannungsprofil für das im Nahbereich liegende Suchobjekt 10. Die mit U₁₀ₐ gekennzeichnete Spannung beschreibt ein Spannungsprofil für das im Fernbereich liegende Suchobjekt 10a.

Die in der vorstehenden Beschreibung, in der Zeichnung sowie in den Ansprüchen offenbarten Merkmale der Erfindung können sowohl einzeln als auch in beliebiger Kombination für die Verwirklichung der Erfindung verwendet werden.

## Patentansprüche

1. Verfahren zum Orten von Objekten (10) mit einer Detektorvorrichtung, bei dem
- auf einer Primärseite der Detektorvorrichtung ein Oszillator (12) einen Schwingkreis mit einer Sendespule (14) anregt und die Sendespule (14) ein elektromagnetisches Wechselfeld aussendet und
- auf einer Sekundärseite der Detektorvorrichtung in einer Empfangsspule (16) ein elektromagnetisches Wechselfeld induziert wird,
**dadurch gekennzeichnet,**
- **dass** die Sendespule (14) und die Empfangsspule (16) räumlich auseinanderliegend so angeordnet sind, dass eine kontinuierliche Spannungstransformation auf die Empfangsspule (16) erfolgt,
- **dass** aus der Primärseite und der Sekundärseite zwei Vergleichsspannungen gewonnen werden,
- **dass** aus den Vergleichsspannungen eine Differenzspannung gewonnen wird und
- **dass** die Differenzspannung zur Objektanzeige und/oder Objektauswertung benutzt wird.

2. Verfahren nach Anspruch 1,
**dadurch gekennzeichnet,**
**dass** der Kopplungsfaktor zwischen Primärseite und Sekundärseite räumlich und/oder geometrisch bestimmt und/oder verändert werden kann.

3. Verfahren nach Anspruch 1 oder 2,
**dadurch gekennzeichnet,**
**dass** eine primäre Signalspannung und eine sekundäre Signalspannung nach Betrag und/oder Phase kompensiert werden.

4. Verfahren nach einem der vorangehenden Ansprüche,
**dadurch gekennzeichnet,**
**dass** der Betrag der Signalspannungen über ein einstellbares Summierglied (28) kompensiert wird.

5. Verfahren nach einem der vorangehenden Ansprüche,
**dadurch gekennzeichnet,**
**dass** der Phasenabgleich zur Kompensation der Restspannung durch Verändern der Sendefrequenz erfolgt.

6. Verfahren nach einem der vorangehenden Ansprüche,
**dadurch gekennzeichnet,**
**dass** der Phasenabgleich bei fester Sendefrequenz durch Verändern der Resonanzfrequenz eines Empfangsschwingkreises erfolgt.

7. Verfahren nach einem der vorangehenden Ansprüche,
**dadurch gekennzeichnet,**
**dass** mittels der Spannungskompensation ein Messspannungsminimum erzeugt wird.

8. Verfahren nach einem der vorangehenden Ansprüche,
**dadurch gekennzeichnet,**
- **dass** die kompensierte Spannung verstärkt wird und
- **dass** die verstärkte Spannung synchronisiert mit der Spannung der Primärseite gleichgerichtet wird.

9. Verfahren nach einem der vorangehenden Ansprüche,
**dadurch gekennzeichnet,**
**dass** zur Optimierung des Signal-Rausch-Verhältnisses hohe Vergleichsspannungspegel verwendet werden.

10. Verfahren nach einem der vorangehenden Ansprüche,
**dadurch gekennzeichnet,**
**dass** durch hohe Vergleichsspannungspegel hohe Differenzspannungen erzeugt werden, die nur eine geringe Gesamtverstärkung erfordern.

11. Verfahren nach einem der vorangehenden Ansprüche,
**dadurch gekennzeichnet,**
**dass** mit einer Sendefrequenz im Bereich von ca. 500 Hz bis ca. 50 kHz gearbeitet wird.

12. Verfahren nach einem der vorangehenden Ansprüche,
**dadurch gekennzeichnet,**
**dass** ein aus der Differenzspannung oder den Phasen der Spannungen abgeleitetes Ausgangssignal einem Analog-Digital-Wandler (ADC) (34) und/oder einem Datenlogger (36) und/oder einem Anzeigeinstrument (38) zugeführt wird.

13. Verfahren nach einem der vorangehenden Ansprüche,
**dadurch gekennzeichnet,**
**dass** die Spannung der Primärseite an einem Punkt abgegriffen wird, welcher zwischen dem Oszillator (12) und einer induktiven Drossel (22) liegt, welche den Oszillator (12) von der Sendespule (14) trennt.

14. Detektorvorrichtung mit
- einer Primärseite, welche einen Oszillator (12) und eine Sendespule (14) aufweist und
- einer Sekundärseite, welche eine Empfangsspule (16) aufweist,
**dadurch gekennzeichnet,**
- **dass** die Kopplung von Sendespule (14) und Empfangsspule vorgegeben und/oder veränderbar ist und
- **dass** Mittel zum Erzeugen einer Differenzspannung aus einer Spannung der Primärseite und einer Spannung der Sekundärseite vorgesehen sind.

15. Detektorvorrichtung nach Anspruch 14,
**dadurch gekennzeichnet,**
**dass** die Mittel zum Erzeugen einer Differenzspannung Mittel zum Kompensieren einer Spannung bezüglich des Betrages umfassen.

16. Detektorvorrichtung nach Anspruch 14 oder 15,
**dadurch gekennzeichnet,**
**dass** die Mittel zum Erzeugen einer Differenzspannung Mittel zum Kompensieren einer Spannung bezüglich der Phase umfassen.

17. Detektorvorrichtung nach einem der Ansprüche 14 bis 16,
**dadurch gekennzeichnet,**
**dass** die Mittel zum Erzeugen einer Differenzspannung Mittel (28) zum gegenphasigen Summieren der Spannung der Primärseite und der Spannung der Sekundärseite umfassen.

18. Detektorvorrichtung nach einem der Ansprüche 14 bis 17,
**dadurch gekennzeichnet,**
**dass** Mittel (24) zum Verändern der Frequenz auf der Primärseite vorgesehen sind.

19. Detektorvorrichtung nach einem der Ansprüche 14 bis 18,
**dadurch gekennzeichnet,**
**dass** Mittel zum Verändern der Resonanzfrequenz eines Resonanzschwingkreises vorgesehen sind.

20. Detektorvorrichtung nach einem der Ansprüche 14 bis 19,
**dadurch gekennzeichnet,**
**dass** ein erster Verstärker (26) zum Erzeugen der Spannung der Sekundärseite aus der auf der Sekundärseite induzierten Spannung vorgesehen ist.

21. Detektorvorrichtung nach einem der Ansprüche 14 bis 20,
**dadurch gekennzeichnet,**
- **dass** zwischen dem Oszillator (12) und der Sendespule (14) eine induktive Drossel (22) angeordnet ist und
- **dass** die Spannung der Primärspule zwischen dem Oszillator (12) und der induktiven Drossel (22) abgegriffen wird.

22. Detektorvorrichtung nach einem der Ansprüche 14 bis 21,
**dadurch gekennzeichnet,**
- **dass** ein Ausgang der Mittel (28) zum gegenphasigen Summieren mit einem Eingang eines zweiten Verstärkers (30) verbunden ist,
- **dass** ein Ausgang des zweiten Verstärkers (30) mit einem Eingang eines Synchrongleichrichters (32) verbunden ist und
- **dass** die Spannung der Primärseite dem Synchrongleichrichter (32) über ein Verzögerungsglied (48) zugeführt wird, wobei die verstärkte Spannung synchronisiert mit der Spannung der Primärseite gleichgerichtet wird.

23. Detektorvorrichtung nach einem der Ansprüche 14 bis 22,
**dadurch gekennzeichnet,**
**dass** an ihrem Ausgang ein Analog-Digital-Wandler (ADC) (34) und/oder ein Datenlogger (36) und/oder eine Anzeigevorrichtung (38) vorgesehen sind.

24. Detektorvorrichtung nach einem der Ansprüche 14 bis 23,
**dadurch gekennzeichnet,**
**dass** zumindest ein Teil der Primärseite und zumindest ein Teil der Sekundärseite in einem Rohr (42) angeordnet sind.

25. Detektorvorrichtung nach einem der Ansprüche 14 bis 24,
**dadurch gekennzeichnet,**
**dass** zumindest ein Teil der Auswerteelektronik in einem Rohr (42) angeordnet ist.

26. Detektorvorrichtung nach einem der Ansprüche 14 bis 25,
**dadurch gekennzeichnet,**
**dass** Sendespule (14) und Empfangsspule (16) mit Ferritkernen oder mit Luftspulen ausgelegt sind.

27. Verwendung einer Detektorvorrichtung nach einem der Ansprüche 14 bis 26 als zylinderförmige Bohrlochsonde.
